# EUROPEAN PATENT APPLICATION

(11) **EP 4 495 500 A1**
(43) Date of publication of application: **22.01.2025**
(21) Application number: 23795883.0
(22) Date of filing: 24.02.2023
(51) Int. Cl.: F25B 5/04, F28F 25/02, F25B 1/00, B01D 53/14, B01D 53/62, B01D 53/78, B01D 53/96, C01B 32/50, F25B 30/02

(54) **CARBON DIOXIDE RECOVERY SYSTEM**

(30) Priority: 27.04.2022 JP 2022073150
(71) Applicant: Mitsubishi Heavy Industries, Ltd., Tokyo 100-8332 (JP)
(72) Inventor: MATSUO, Takeshi, Yokohama-shi, Kanagawa 220-8401 (JP); YONEKAWA, Takahito, Yokohama-shi, Kanagawa 220-8401 (JP); NAKANE, Masaharu, Yokohama-shi, Kanagawa 220-8401 (JP); ATARASHIYA, Kenji, Yokohama-shi, Kanagawa 220-0012 (JP); INUI, Masayuki, Tokyo 100-8332 (JP); NAGAYASU, Hiromitsu, Tokyo 100-8332 (JP); UECHI, Hideyuki, Tokyo 100-8332 (JP); KATSUKI, Norito, Tokyo 100-8332 (JP)
(74) Representative: Studio Torta S.p.A.
(86) International application number: PCT/JP2023/006617
(87) International publication number: WO 2023/210135

(57) **Abstract**

A carbon dioxide recovery system includes: a cooling tower configured to cool a gas containing carbon dioxide by bringing the gas into contact with cooling water; an absorption tower configured to cause the carbon dioxide to be absorbed into an absorbing liquid by bringing the gas cooled in the cooling tower into contact with the absorbing liquid; a regeneration tower configured to release the carbon dioxide from the absorbing liquid by heating the absorbing liquid in which the carbon dioxide is absorbed in the absorption tower; and a heat pump configured to directly or indirectly heat the absorbing liquid in the regeneration tower with heat of the cooling water.

## Description

The present disclosure relates to a carbon dioxide recovery system.

The present application claims priority based on Japanese Patent Application No. 2022-073150 filed in the Japan Patent Office on April 27, 2022, the content of which is incorporated herein by reference.

### Background Art

Patent Document 1 describes a carbon dioxide recovery system that recovers carbon dioxide from exhaust gas of a gas turbine.

This carbon dioxide recovery system includes an absorption tower that causes the carbon dioxide in an exhaust gas to be absorbed into an absorbing liquid, a regeneration tower that releases carbon dioxide from the absorbing liquid in which the carbon dioxide is absorbed, and a heat pump for heating the absorbing liquid in the regeneration tower with heat recovered from the exhaust gas in a waste heat recovery device.

### Citation List

### Patent Literature

Patent Document 1: JP 2019-190359 A

### Summary of Invention

### Technical Problem

A known carbon dioxide recovery system heats an absorbing liquid in a regeneration tower using steam generated by burning fossil fuel in a device such as a boiler.

For this reason, despite a carbon dioxide recovery device, there is a problem that carbon dioxide is generated in order to obtain heat for regeneration of an absorbing liquid.

In order to obtain such a heat source for regenerating the absorbing liquid without generating carbon dioxide, introduction of a heat pump is effective.

As an example of this, for example, the carbon dioxide recovery system described in Patent Document 1 can improve the thermal efficiency of the entire plant in terms of recovering heat from the exhaust gas with the waste heat recovery device and heating the absorbing liquid in the regeneration tower with the heat recovered using the heat pump.

However, since this system combines a gas turbine and a heat pump in a large-scale power plant, when this system is to be applied to a carbon dioxide recovery system for a carbon dioxide discharge source from a point source installed in any place such as a factory or a building, it is always necessary to combine this system with a gas turbine, which is a problem because of its high cost.

When the exhaust gas flowing out of the waste heat recovery device is supplied to the absorption tower as it is, the absorption efficiency of carbon dioxide into the absorbing liquid is reduced in the absorption tower, and therefore it is necessary to provide a cooling tower for cooling the exhaust gas between the waste heat recovery device and the absorption tower.

However, in Patent Document 1, since there is no cooling tower before the absorption tower, there is also a problem that the absorption efficiency of carbon dioxide is low.

In view of the above circumstances, an object of at least one embodiment of the present disclosure is to provide a carbon dioxide recovery system that can efficiently recover carbon dioxide while suppressing discharge of carbon dioxide generated for obtaining a heat source even with a carbon dioxide discharge source at any location, that is, a point source.

### Solution to Problem

To achieve the above object, a carbon dioxide recovery system according to the present disclosure includes: a cooling tower configured to cool a gas containing carbon dioxide by bringing the gas into contact with cooling water; an absorption tower configured to cause the carbon dioxide to be absorbed into an absorbing liquid by bringing the gas cooled in the cooling tower into contact with the absorbing liquid; a regeneration tower configured to release the carbon dioxide from the absorbing liquid by heating the absorbing liquid in which the carbon dioxide is absorbed in the absorption tower; and a heat pump configured to directly or indirectly heat the absorbing liquid in the regeneration tower with heat of the cooling water.

### Advantageous Effects of Invention

According to the carbon dioxide recovery system of the present disclosure, even when the temperature of the gas containing carbon dioxide is high, the absorbing liquid in the regeneration tower is directly or indirectly heated by the heat pump using, as a heat source, the cooling water obtained by cooling the gas in the cooling tower. Therefore, even a discharge source at any location, that is, a point source allows the carbon dioxide to be efficiently recovered while discharge of the carbon dioxide generated for obtaining the heat source is suppressed.

### Brief Description of Drawings

FIG. 1 is a schematic configuration diagram of a carbon dioxide recovery system according to a first embodiment of the present disclosure.
FIG. 2 is a schematic configuration diagram of a first modification of the carbon dioxide recovery system according to the first embodiment of the present disclosure.
FIG. 3 is a schematic configuration diagram of a second modification of the carbon dioxide recovery system according to the first embodiment of the present disclosure.
FIG. 4 is a schematic example of a map used in the second modification of the carbon dioxide recovery system according to the first embodiment of the present disclosure.
FIG. 5 is a configuration diagram of a heat pump in a third modification of the carbon dioxide recovery system according to the first embodiment of the present disclosure.
FIG. 6 is a configuration diagram of a heat pump in a fourth modification of the carbon dioxide recovery system according to the first embodiment of the present disclosure.
FIG. 7 is a schematic configuration diagram of a carbon dioxide recovery system according to a second embodiment of the present disclosure.
FIG. 8 is a schematic configuration diagram of a carbon dioxide recovery system according to a third embodiment of the present disclosure.
FIG. 9 is a schematic configuration diagram of a carbon dioxide recovery system according to a fourth embodiment of the present disclosure.
FIG. 10 is a schematic configuration diagram of a carbon dioxide recovery system according to a fifth embodiment of the present disclosure.

### Description of Embodiments

A carbon dioxide recovery system according to an embodiment of the present disclosure will be described below with reference to the drawings.

The embodiments described below each illustrate one aspect of the present disclosure, do not limit the present disclosure, and can be arbitrarily changed within the scope of the technical idea of the present disclosure.

### First Embodiment

### Configuration of Carbon Dioxide Recovery System According to First Embodiment of Present Disclosure

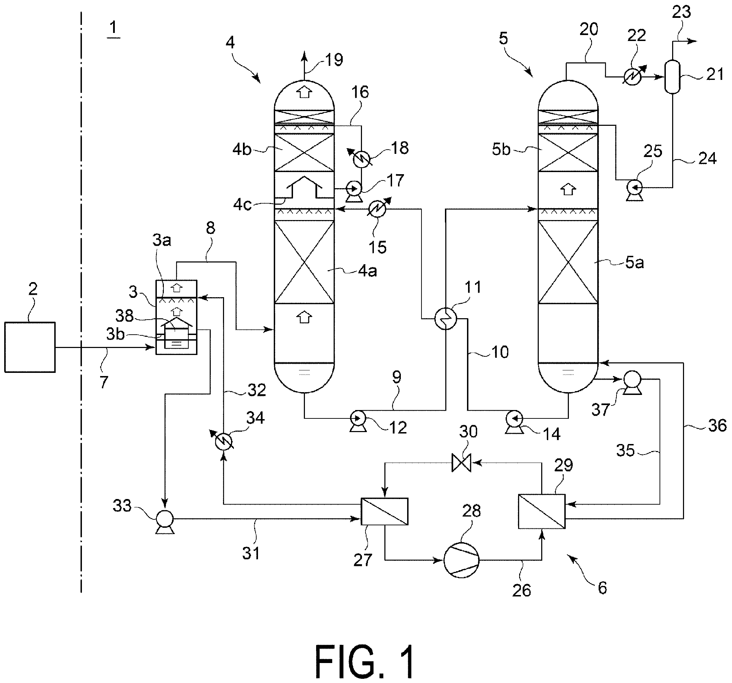

As illustrated in FIG. 1, a carbon dioxide recovery system 1 according to the first embodiment of the present disclosure is for removing and recovering carbon dioxide from a gas (e.g., combustion exhaust gas) containing carbon dioxide discharged from a discharge source 2 such as any combustion device.

The carbon dioxide recovery system 1 includes: a cooling tower 3 configured to cool a gas discharged from the discharge source 2, an absorption tower 4 configured to cause the carbon dioxide contained in a gas cooled in the cooling tower 3 to be absorbed into an absorbing liquid, a regeneration tower 5 configured to release the carbon dioxide by heating the absorbing liquid in which the carbon dioxide is absorbed in the absorption tower 4, and a heat pump 6 configured to heat the absorbing liquid in the regeneration tower 5.

The cooling tower 3 includes a spray 3a for spraying cooling water into the cooling tower 3.

The absorption tower 4 includes an absorbing unit 4a that absorbs carbon dioxide in a gas flowing into the absorption tower 4, a cleaning unit 4b that is provided above the absorbing unit 4a and cleans a gas rising in the absorbing tower 4a as described later, and a chimney tray 4c provided between the absorbing unit 4a and the cleaning unit 4b.

The regeneration tower 5 includes a releasing unit 5a that releases the carbon dioxide from an absorbing liquid in which the carbon dioxide is absorbed, and a cleaning unit 5b that is provided above the releasing unit 5a and cleans a gas rising in the regeneration tower 5 as described later.

The absorbing unit 4a, the cleaning units 4b and 5b, and the releasing unit 5a can be formed of a filling layer filled with a filler of any material, for example.

The discharge source 2 and the cooling tower 3 are communicated by a gas flow line 7.

The cooling tower 3 and the absorption tower 4 are communicated by a gas flow line 8.

The absorption tower 4 and the regeneration tower 5 are communicated by a rich absorbing liquid line 9 connected to the tower bottom of the absorption tower 4 and a position above the releasing unit 5a in the regeneration tower 5 and a lean absorbing liquid line 10 connected to the tower bottom of the regeneration tower 5 and a position above the absorbing unit 4a in the absorption tower 4.

As described later, a rich absorbing liquid, which is an absorbing liquid containing a large amount of carbon dioxide, flows through the rich absorbing liquid line 9, and a lean absorbing liquid, which is an absorbing liquid that releases the carbon dioxide from the rich absorbing liquid and has a content of the carbon dioxide relatively lower than that of the rich absorbing liquid, flows through the lean absorbing liquid line 10.

A heat exchanger 11 configured to exchange heat between the rich absorbing liquid flowing through the rich absorbing liquid line 9 and the lean absorbing liquid flowing through the lean absorbing liquid line 10 is provided, and heat is exchanged between the lean absorbing liquid of approximately 90 to 120°C and the rich absorbing liquid of approximately 40 to 60°C, thereby improving the thermal efficiency of the process.

The rich absorbing liquid line 9 is provided with a pump 12 between the absorption tower 4 and the heat exchanger 11.

The lean absorbing liquid line 10 is provided with a pump 14 between the regeneration tower 5 and the heat exchanger 11, and a cooler 15, which is a heat exchanger, between the heat exchanger 11 and the absorption tower 4.

Since the absorption performance of carbon dioxide is improved as the temperature of the lean absorbing liquid is lower, the cooler 15 is installed for this purpose.

The absorption tower 4 is provided with a circulation line 16 for circulating cooling water in the absorption tower 4 between the position to which the lean absorbing liquid line 10 is connected and the tower top, and the circulation line 16 is provided with a pump 17 and a cooler 18 as a heat exchanger.

The cooler 18 is installed for cooling a gas with cooling water before flowing out of the absorption tower 4, and for suppressing an absorbing liquid mist from being released to the outside of the absorption tower 4 by the cooling water capturing the absorbing liquid mist in the gas.

A clean gas line 19 for a gas having a reduced concentration of carbon dioxide to flow out as a clean gas is connected to the tower top of the absorption tower 4.

A wet recovery gas line 20 through which the gas in the regeneration tower 5 flows out is connected to the tower top of the regeneration tower 5.

A steam-water separator 21 is connected to a downstream end of the wet recovery gas line 20.

The wet recovery gas line 20 is provided with a cooler 22, which is a heat exchanger for separating steam from a wet recovery gas, which is a mixed gas of carbon dioxide and steam, generated in the regeneration tower 5.

One end of a dry recovery gas line 23 and one end of a condensate line 24 are connected to the tower top and the tower bottom, respectively, of the steam-water separator 21.

As described later, since the gas flowing out of the tower top of the steam-water separator 21 is a gas (dry recovery gas) containing carbon dioxide as a main component, the other end of the dry recovery gas line 23 is connected to a device not illustrated for consuming or storing carbon dioxide.

The other end of the condensate line 24 is connected to the regeneration tower 5 above the cleaning unit 5b, and the condensate line 24 is provided with a pump 25.

The heat pump 6 has a configuration in which a refrigerant circulation line 26 through which a refrigerant circulates is provided with an evaporator 27, a compressor 28, a condenser 29, and a decompressor 30 such as an expansion valve or a screw expander.

The evaporator 27 is for exchanging heat between the cooling water and the refrigerant in the cooling tower 3, and is provided with a cooling water supply line 31 for supplying cooling water from the cooling tower 3 to the evaporator 27, and a cooling water return line 32 for returning, to the cooling tower 3, the cooling water having exchanged heat with the refrigerant in the evaporator 27.

The cooling water supply line 31 is provided with a pump 33, and the cooling water return line 32 is provided with a cooler 34, which is a heat exchanger.

The condenser 29 is for exchanging heat between the lean absorbing liquid and the refrigerant in the regeneration tower 5, and is provided with a lean absorbing liquid supply line 35 for supplying a lean absorbing liquid from the regeneration tower 5 to the condenser 29, and a lean absorbing liquid return line 36 for returning, to the regeneration tower 5, the lean absorbing liquid having exchanged heat with the refrigerant in the condenser 29.

The lean absorbing liquid supply line 35 is provided with a pump 37.

Although FIG. 1 illustrates an example in which the lean absorbing liquid is directly heated by the condenser 29, the present application is not limited to this form, and a configuration may be adopted in which another water circulation system in which heat is exchanged with the refrigerant in the condenser 29 is provided, and the lean absorbing liquid is indirectly heated by exchanging heat between the steam generated by the condenser 29 and the lean absorbing liquid flowing through the lean absorbing liquid supply line 35.

In this case, since the condenser 29 generates steam, the generated steam can be applied to purposes other than heating of the lean absorbing liquid.

Although the refrigerant (chlorofluorocarbon (CFC), hydrochlorofluorocarbon (HCFC), hydrofluorocarbon (HFC), hydrofluoroolefin (HFO), hydrocarbon system, and the like) used in the heat pump 6 is not particularly limited, it is necessary to select a refrigerant having a critical temperature higher than the maximum refrigerant temperature at an inlet of the condenser 29.

Due to the characteristics of the absorbing liquid used in the carbon dioxide recovery system 1, when the pressure in the regeneration tower 5 is increased, it is necessary to increase the regeneration temperature of the lean absorbing liquid in the regeneration tower 5.

In such a case, increasing the regeneration temperature can be achieved by adopting a refrigerant having a higher critical temperature and shifting the temperature of the heat pump 6 to a higher temperature side.

Although not an essential configuration in the first embodiment, a water quality improvement device 38 for adjusting the water quality of the cooling water in the cooling tower 3 may be provided.

Here, the water quality adjustment means suppressing mixing of solids such as a sulfur oxide, a nitrogen oxide, or ash generated by combustion into the cooling water by removing these substances from the cooling water, or removing these substances from the exhaust gas before contact with the cooling water.

In the first embodiment, the water quality improvement device 38 configured to be provided in the cooling tower 3 is exemplified.

As known in JP 2012-179533 A filed by the applicant of the present disclosure, such the water quality improvement device 38 blows up an absorbing liquid from a nozzle disposed on a tower floor surface of the cooling tower 3, and brings a gas and a liquid mist into contact with each other to absorb, into the absorbing liquid, impurities (solids such as a sulfur oxide, a nitrogen oxide, or ash generated by combustion) in the gas.

As the absorbing liquid, an aqueous solution containing sodium hydroxide or sodium carbonate as an absorbing agent may be used.

In addition to this, a device provided in the cooling water supply line 31, that is, a device that can adjust the water quality of the cooling water flowing through the cooling water supply line 31 may be used as the water quality improvement device 38.

When the water quality improvement device 38 is installed in the cooling tower 3, in order to obtain cooling water from which solids such as a sulfur oxide, a nitrogen oxide, or ash generated by combustion are removed, a tray 3b may be provided around the water quality improvement device 38, and an extraction port of the cooling water supply line 31 may be provided above the tray 3b.

### Operation of Carbon Dioxide Recovery System According to First Embodiment of Present Disclosure

Next, the operation of the carbon dioxide recovery system 1 according to the first embodiment of the present disclosure will be described.

The gas containing carbon dioxide discharged from the discharge source 2 flows into the cooling tower 3 via the gas flow line 7.

The gas flowing into the cooling tower 3 is blown into a cooling water mist in the cooling tower 3.

That is, the gas and the cooling water are brought into contact with each other in the cooling tower 3.

At this time, if the gas contains impurities, the impurities are captured by the cooling water and the gas is cooled.

The gas from which impurities have been removed and which has been cooled flows out from the cooling tower 3.

On the other hand, the cooling water in contact with the gas is brought into a state of being mixed with impurities, and the temperature rises.

The gas flowing out of the cooling tower 3 flows into the absorption tower 4 via the gas flow line 8.

The gas flowing into the absorption tower 4 rises in the absorption tower 4.

As described later, the lean absorbing liquid flows into the absorption tower 4 via the lean absorbing liquid line 10 and drops in the absorption tower 4.

In the absorbing unit 4a, the rising gas and the dropping lean absorbing liquid come into gas-liquid contact with each other, whereby carbon dioxide contained in the gas is absorbed by the lean absorbing liquid, and at least part of the carbon dioxide is removed from the gas.

Such operation allows the absorbing liquid in which the carbon dioxide is absorbed to stay as a rich absorbing liquid at the bottom of the absorption tower 4.

The cooling water flows out of the absorption tower 4 by the pump 17, flows through the circulation line 16, is cooled by the cooler 18, is returned again into the absorption tower 4, and drops in the cleaning unit 4b.

When dropping in the cleaning unit 4b, the cooling water comes into gas-liquid contact with the gas from which at least part of carbon dioxide has been removed, thereby recovering the absorbing liquid mist contained in the gas.

The cooling water dropped from the cleaning unit 4b stays on the chimney tray 4c, and flows through the circulation line 16 again by the pump 17.

The gas flowing out of the cleaning unit 4b flows out of the absorption tower 4 through the clean gas line 19 as a clean gas.

In this manner, discharge of the absorbing liquid mist contained in the clean gas flowing out of the absorption tower 4 is suppressed.

The rich absorbing liquid in the absorption tower 4 is extracted from the tower bottom of the absorption tower 4 by the pump 12 and flows through the rich absorbing liquid line 9.

The rich absorbing liquid flowing through the rich absorbing liquid line 9 is heated by heat exchange in the heat exchanger 11 with the lean absorbing liquid flowing through the lean absorbing liquid line 10 as described later, and then flows into the regeneration tower 5.

The rich absorbing liquid flowing into the regeneration tower 5 drops in the regeneration tower 5.

When dropping in the releasing unit 5a, the rich absorbing liquid is heated by coming into contact with saturated steam generated by the operation described later and rising in the releasing unit 5a.

Due to this, at least part of carbon dioxide is released from the rich absorbing liquid, and the rich absorbing liquid becomes a lean absorbing liquid and stays at the tower bottom of the regeneration tower 5.

The lean absorbing liquid in the regeneration tower 5 is extracted from the tower bottom of the regeneration tower 5 by the pump 37 and supplied to the heat pump 6 via the lean absorbing liquid supply line 35.

By the operation described later, the lean absorbing liquid is directly or indirectly heated, and the heated lean absorbing liquid is returned to the regeneration tower 5 via the lean absorbing liquid return line 36.

Due to this, since the temperature of the absorbing liquid in the regeneration tower 5 rises, carbon dioxide is released from the lean absorbing liquid and water is evaporated, and saturated steam mainly containing carbon dioxide and steam rises in the regeneration tower 5.

The saturated steam generated by the operation described above rises in the regeneration tower 5 and flows out from the tower top of the regeneration tower 5 as a wet recovery gas.

The wet recovery gas flowing out of the tower top of the regeneration tower 5 flows through the wet recovery gas line 20 and is cooled by the cooler 22.

The cooled wet recovery gas flows into the steam-water separator 21.

When the wet recovery gas is cooled, components (mainly water) having a low boiling point condense while the carbon dioxide remains a gas.

Therefore, in the steam-water separator 21, the condensate and the gas are brought into a gas-liquid separated state.

The dry recovery gas, which is mainly carbon dioxide, flows out of the tower top of the steam-water separator 21 and is supplied to a device not illustrated via the dry recovery gas line 23.

On the other hand, the condensate is extracted from the tower bottom of the steam-water separator 21 by the pump 25, is returned to the regeneration tower 5 via the condensate line 24, and drops in the regeneration tower 5.

When dropping in the regeneration tower 5, the condensate comes into contact with saturated steam in the cleaning unit 5b and cleans the saturated steam.

The lean absorbing liquid in the regeneration tower 5 is extracted from the tower bottom of the regeneration tower 5 also by the pump 14, and flows through the lean absorbing liquid line 10.

The lean absorbing liquid flowing through the lean absorbing liquid line 10 is cooled by heat exchange in the heat exchanger 11 with the rich absorbing liquid flowing through the rich absorbing liquid line 9.

The lean absorbing liquid cooled in the heat exchanger 11 is further cooled in the cooler 15, flows into the absorption tower 4 as described above, and drops in the absorption tower 4.

In the heat pump 6, the refrigerant circulates in the refrigerant circulation line 26.

The cooling water in the cooling tower 3 is supplied to the evaporator 27 via the cooling water supply line 31 by the pump 33.

In the evaporator 27, heat exchange between the cooling water and the refrigerant causes the refrigerant to be heated and evaporated.

The cooling water flowing out of the evaporator 27 flows through the cooling water return line 32, is cooled by the cooler 34 at that time, and is returned to the cooling tower 3.

A gaseous refrigerant evaporated in the evaporator 27 flows into the condenser 29 in a state where the gaseous refrigerant is compressed by the compressor 28 and the temperature rises.

In the condenser 29, heat is directly or indirectly exchanged with the lean absorbing liquid extracted from the tower bottom of the regeneration tower 5, whereby the lean absorbing liquid is heated while the refrigerant is cooled and condensed.

The heated lean absorbing liquid is returned to the regeneration tower 5 via the lean absorbing liquid return line 36 as described above.

After flowing out of the condenser 29, the condensed refrigerant is decompressed by the decompressor 30 and the temperature decreases.

The refrigerant flowing out of the decompressor 30 flows into the evaporator 27 again.

In this manner, even when the temperature of the gas containing carbon dioxide is high, a lean absorbing liquid in the regeneration tower 5 is directly or indirectly heated by the heat of the cooling water obtained by cooling the gas in the cooling tower 3. Therefore, even a discharge source at any point source allows the carbon dioxide to be efficiently recovered while discharge of the carbon dioxide generated for obtaining the heat source is suppressed.

When the gas supplied to the cooling tower 3 contains solids such as a sulfur oxide, a nitrogen oxide, or ash generated by combustion, these are contained in the cooling water by contact between the gas and the cooling water.

When the cooling water containing them is supplied to the heat pump 6, there is a risk of corroding pipes (the cooling water supply line 31 and the cooling water return line 32) and the evaporator 27 of the heat pump 6.

On the other hand, if the water quality improvement device 38 is provided, the cooling water whose water quality has been adjusted by the water quality improvement device 38 is supplied to the heat pump 6, and thus the risk of corrosion of the pipes and the evaporator 27 of the heat pump 6 can be reduced.

The operation in the cooling tower 3 when a device known in JP 2012-179533 A is provided as the water quality improvement device 38 in the cooling tower 3 is as follows.

The gas containing carbon dioxide discharged from the discharge source 2 flows into the cooling tower 3 from a position below the tray 3b via the gas flow line 7.

Impurities contained in the gas flowing into the cooling tower 3 are removed by the water quality improvement device 38.

When flowing out of the water quality improvement device 38, the gas from which impurities have been removed is cooled by coming into countercurrent flow contact with the cooling water sprayed from the spray 3a above the tray 3b.

The cooling water having cooled the gas accumulates on the tray 3b.

Since the gas from which impurities have been removed by the water quality improvement device 38 comes into contact with the cooling water, the cooling water accumulated on the tray 3b does not contain impurities or has a low impurity concentration.

The cooling water on the tray 3b is supplied to the heat pump 6 via the cooling water supply line 31.

### Modification of Carbon Dioxide Recovery System According to First Embodiment of Present Disclosure

### First Modification

As the lean absorbing liquid is repeatedly reused in the absorption tower 4, nonvolatile substances such as contaminants from gas in gas-liquid contact in the absorption tower 4 and absorbing liquid deterioration are accumulate in the lean absorbing liquid.

There is a case where a reclaimer is provided for the purpose of removing such nonvolatile accumulation from the lean absorbing liquid.

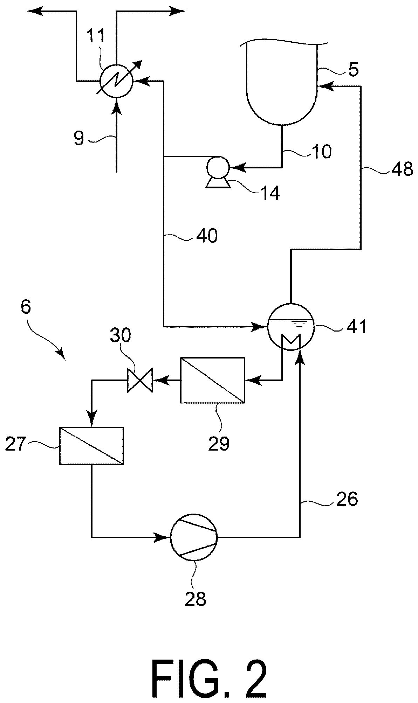

In the first embodiment, for example, as illustrated in FIG. 2, a diverging line 40 diverging from the lean absorbing liquid line 10 between the pump 14 and the heat exchanger 11 is provided, and a downstream end of the diverging line 40 is connected to a reclaimer 41, whereby a part of the lean absorbing liquid is extracted and supplied to the reclaimer 41.

Steam is generated in the reclaimer 41 by the operation described later, and in order to supply this steam to the regeneration tower 5, a steam supply line 48 causing the reclaimer 41 and the regeneration tower 5 to communicate with each other is provided.

When such the reclaimer 41 is provided, the refrigerant circulation line 26 may pass through the reclaimer 41 to supply, to the reclaimer 41, part of the heat supplied from the heat pump 6. When steam is generated in the condenser 29 of the heat pump 6, this steam may be supplied as a heat source of the reclaimer 41.

In the reclaimer 41, steam is generated by the absorbing liquid heated by the refrigerant or steam circulating through the refrigerant circulation line 26, that is, the absorbing liquid directly or indirectly heated by the heat of the refrigerant, and this steam is supplied to the regeneration tower 5.

Due to this, since the lean absorbing liquid from which the nonvolatile accumulation has been removed is supplied to the regeneration tower 5, the concentration of the nonvolatile accumulation in the lean absorbing liquid can be reduced.

### Second Modification

Variation of a load of the discharge source 2 can change the concentration of carbon dioxide in the gas discharged from the discharge source 2.

When the concentration of carbon dioxide in the discharged gas is constant regardless of the load of the discharge source 2, the operation conditions of the absorption tower 4 and the regeneration tower 5 may be controlled in accordance with the amount of the discharged gas.

However, in general, since the concentration of carbon dioxide in the gas discharged from the discharge source 2 varies depending on the variation of the load of the discharge source 2, it is possible to assume a case where the total amount of carbon dioxide actually treated does not change because the concentration of carbon dioxide in the gas decreases even if the amount of gas increases, for example.

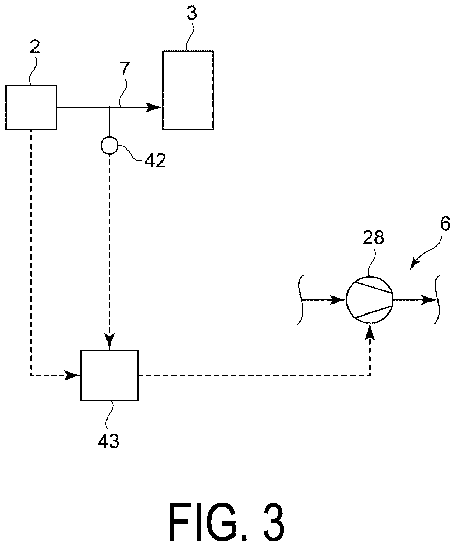

In order to cope with such a case, for example, as illustrated in FIG. 3, a sensor 42 that detects the flow rate of the gas flowing through the gas flow line 7 and carbon dioxide in the gas, and a control device 43 may be provided.

The control device 43 is electrically or wirelessly connected to the sensor 42 such that a detection value from the sensor 42 is transmitted.

The control device 43 is also configured to detect a load of the discharge source 2.

For example, in a case where the discharge source 2 is a gas engine, if the control device 43 detects operation data such as a power generation amount of the gas engine, the control device 43 can estimate the load of the gas engine.

Furthermore, the control device 43 is configured to be able to control an operation condition (e.g., rotation speed or the like) of the compressor 28 of the heat pump 6.

The control device 43 includes, for example, a central processing unit (CPU), a random access memory (RAM), a read only memory (ROM), and a computer-readable storage medium.

A series of processes for implementing various functions are stored in a storage medium or the like in the form of a program, for example, and the CPU reads this program into the RAM or the like and executes information processing and computation processing, thereby implementing various functions.

Note that a program may be applied with a form in which the program is installed in advance in a ROM or another storage medium, a form in which the program is provided in a state of being stored in a computer-readable storage medium, a form in which the program is distributed via a wired or wireless communication means, or the like.

The computer-readable storage medium includes a magnetic disk, a magneto-optical disk, a CD-ROM, a DVD-ROM, and a semiconductor memory.

Such the control device 43 stores a map for controlling the operation condition of the compressor 28 based on a load of the discharge source 2 and a detection value from the sensor 42.

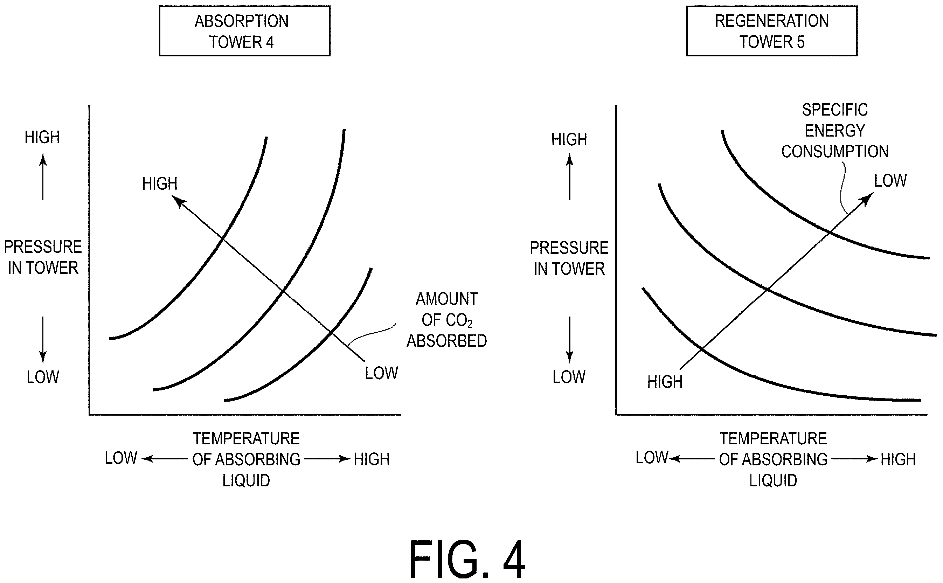

An example of this map is illustrated in FIG. 4.

This map is configured by the relationship between the temperature of the lean absorbing liquid and the pressure in the tower in each of the absorption tower 4 and the regeneration tower 5.

In the absorption tower 4, the higher the pressure in the tower is and the lower the temperature of the lean absorbing liquid is, the higher the absorption capacity of carbon dioxide tends to be.

In the regeneration tower 5, the higher the pressure in the tower is and the higher the temperature of the lean absorbing liquid is, the lower the specific energy consumption is.

The control device 43 controls the operation condition of the compressor 28 based on the load of the discharge source 2 and the detection value from the sensor 42 so as to satisfy these two maps.

### Third Modification

In the first embodiment, the heat pump 6 is provided with one compressor 28, but the present invention is not limited to this form, and a plurality of compressors may be provided.

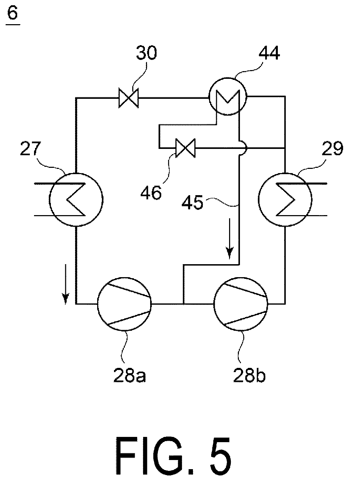

FIG. 5 is a configuration diagram of the heat pump 6 including two compressors 28a and 28b.

By providing a plurality of compressors, the heat amount (enthalpy difference) that can be recovered by the evaporator 27 can be increased.

The configuration provided with the two compressors 28a and 28b may be provided with an economizer 44 between the condenser 29 and the decompressor 30.

In this case, a refrigerant recycle line 45 connecting between the compressors 28a and 28b and between the condenser 29 and the economizer 44 is provided, and the refrigerant recycle line 45 is provided with a decompressor 46 for pressure adjustment.

A part of the refrigerant flowing out of the condenser 29, that is, the refrigerant in which the refrigerant flowing through the refrigerant recycle line 45 is adiabatically expanded by the decompressor 46, and a remnant of the refrigerant flowing out of the condenser 29 are subjected to heat exchange by the economizer 44.

Such heat exchange in the economizer 44 can cool the refrigerant on a low-pressure side and improve the performance of the heat pump 6.

Since the outlet temperature of the compressor 28a decreases, the maximum temperature of the refrigerant gas can be suppressed, and the reliability of the heat pump 6 can be improved.

### Fourth Modification

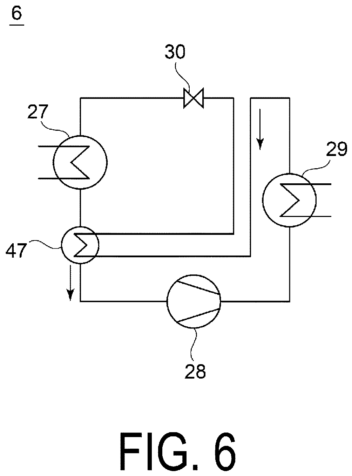

As illustrated in FIG. 6, an internal heat exchanger 47 may be provided between the evaporator 27 and the compressor 28.

The internal heat exchanger 47 exchanges heat between the refrigerant flowing out of the evaporator 27 and the refrigerant flowing out of the condenser 29.

Heat exchange in the internal heat exchanger 47 allows the refrigerant gas flowing into the compressor 28 to have a degree of superheat, helps reduce the risk of mixing droplets into the refrigerant gas flowing into the compressor 28, and thus reduce the risk of damaging an impeller of the compressor 28.

Each of the above-described first to fourth modifications is not limited to being applied to the first embodiment alone, and two, three, or all the configurations of the first to fourth modifications can be applied to the first embodiment as long as there is no technical problem or inconsistency.

### Second Embodiment

Next, a carbon dioxide recovery system according to the second embodiment will be described.

The carbon dioxide recovery system according to the second embodiment is one according to the first embodiment in which the heat source for heating the absorbing liquid in the regeneration tower 5 can be switched.

Note that in the second embodiment, the same components as those of the first embodiment are denoted by the same reference signs, and detailed description thereof will be omitted.

### Configuration of carbon dioxide recovery system according to Second Embodiment of present disclosure

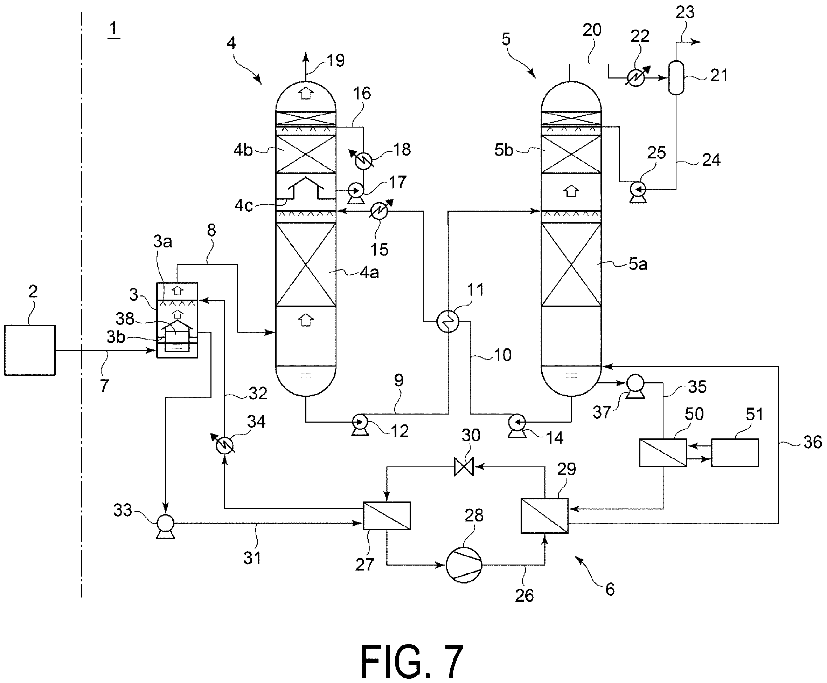

As illustrated in FIG. 7, the carbon dioxide recovery system 1 according to the second embodiment is provided with a reboiler 50 in the lean absorbing liquid supply line 35.

The reboiler 50 is a heat exchanger that heats the lean absorbing liquid by heat exchange between the lean absorbing liquid flowing through the lean absorbing liquid supply line 35 and steam, and the steam can be supplied from a boiler 51, for example.

Other configurations are the same as those of the first embodiment.

### Operation of Carbon Dioxide Recovery System According to Second Embodiment of Present Disclosure

The second embodiment is different from the first embodiment only in that the lean absorbing liquid in the regeneration tower 5 can be heated by any one or both of the heat pump 6 and the reboiler 50, and the other operations are the same as those of the first embodiment.

When the lean absorbing liquid is heated by the heat pump 6, if supply of steam to the reboiler 50 is stopped, the lean absorbing liquid flowing through the lean absorbing liquid supply line 35 flows into the condenser 29 without being heated by the reboiler 50, and thus the operation is the same as the operation of the first embodiment.

On the other hand, when the lean absorbing liquid is heated by the reboiler 50, the operation of the heat pump 6 is stopped and steam is supplied to the reboiler 50, whereby the lean absorbing liquid is heated by the reboiler 50 but passes through the condenser 29 without being heated and returns to the regeneration tower 5 via the lean absorbing liquid return line 36.

Since the temperature of the gas containing carbon dioxide is low and the temperature of the cooling water is also low at the time of starting the carbon dioxide recovery system 1, the heat amount may be insufficient only with heating by the heat pump 6.

When the compressor 28 is driven by an electric motor in the heat pump 6, electric energy is necessary, and therefore, when the electricity rate is high, the operation cost of the carbon dioxide recovery system 1 may be higher in heating by the heat pump 6 than in heating by steam in the reboiler 50.

On the other hand, in the second embodiment, a hybrid operation in which the loads of the heat pump 6 and the reboiler 50 are optimally controlled enables the operation of the carbon dioxide recovery system 1 in consideration of a smooth start operation and a low operation cost of the carbon dioxide recovery system 1.

### Third Embodiment

Next, a carbon dioxide recovery system according to the third embodiment will be described.

The carbon dioxide recovery system according to the third embodiment is one according to the first or second embodiment in which cooling water is heated before the cooling water is supplied from the cooling tower 3 to the evaporator 27.

Hereinafter, the third embodiment will be described with a configuration in which the above-described change is made to the first embodiment, but the third embodiment may be configured by making the above-described change to the second embodiment.

Note that in the third embodiment, the same components as those of the first embodiment are denoted by the same reference signs, and detailed description thereof will be omitted.

### Configuration of Carbon Dioxide Recovery System According to Third Embodiment of Present Disclosure

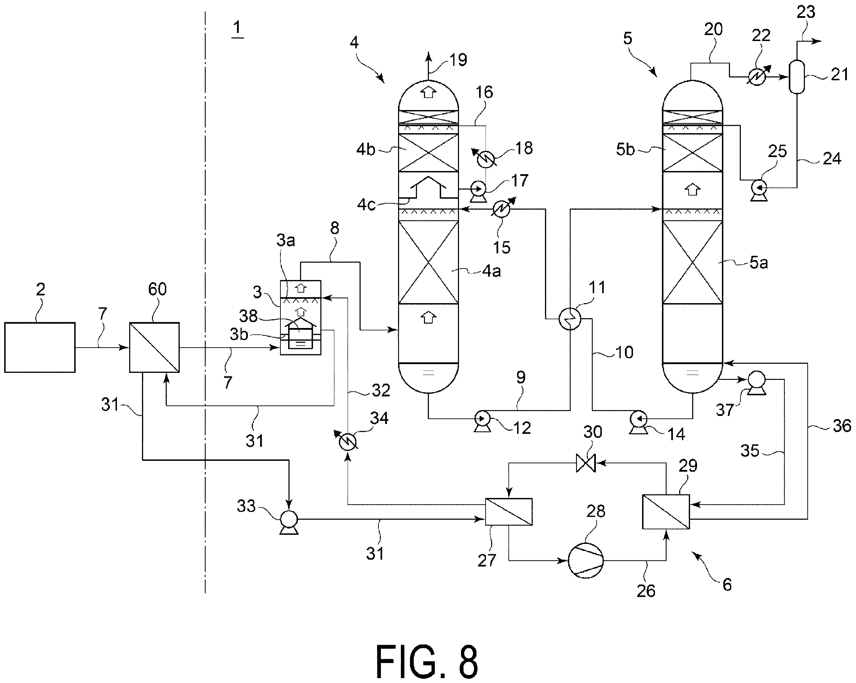

As illustrated in FIG. 8, in the carbon dioxide recovery system 1 according to the third embodiment is provided with a heat exchanger 60 in the gas flow line 7.

The heat exchanger 60 is for heating the cooling water by heat exchange between the gas supplied from the discharge source 2 to the cooling tower 3 and the cooling water supplied from the cooling tower 3 to the evaporator 27. The cooling water supply line 31 passes through the heat exchanger 60.

Other configurations are the same as those of the first embodiment.

### Operation of Carbon Dioxide Recovery System According to Third Embodiment of Present Disclosure

In the third embodiment, when supplied from the cooling tower 3 to the evaporator 27, the cooling water is heated by heat exchange with the gas from the discharge source 2 in the heat exchanger 60.

The heated cooling water flows into the evaporator 27.

Other operations are the same as those of the first embodiment.

In the third embodiment, the temperature of the refrigerant flowing out of the evaporator 27 increases as compared with the case not provided with the heat exchanger 60, and therefore the performance of the heat pump 6 can be improved.

In the heat exchanger 60, the cooling water is heated while the gas is cooled.

At this time, when the gas is cooled to the dew point or below of an acidic gas contained in the gas, a heat transfer tubes of the heat exchanger 60 and the gas flow line 7 are corroded, and therefore, when the temperature of the gas flowing into the heat exchanger 60 is low, it is preferable to bypass the heat exchanger 60 by adjusting the flow rate of the cooling water or providing a bypass line bypassing the heat exchanger 60.

### Fourth Embodiment

Next, a carbon dioxide recovery system according to the fourth embodiment will be described.

The carbon dioxide recovery system according to the fourth embodiment is one according to any of the first to third embodiments in which a refrigerant is heated before the refrigerant flows into the evaporator 27 in the heat pump 6.

Hereinafter, the fourth embodiment will be described with a configuration in which the above-described change is made to the first embodiment, but the fourth embodiment may be configured by making the above-described change to the second or third embodiment.

Note that in the fourth embodiment, the same components as those of the first embodiment are denoted by the same reference signs, and detailed description thereof will be omitted.

### Configuration of Carbon Dioxide Recovery System According to Fourth Embodiment of Present Disclosure

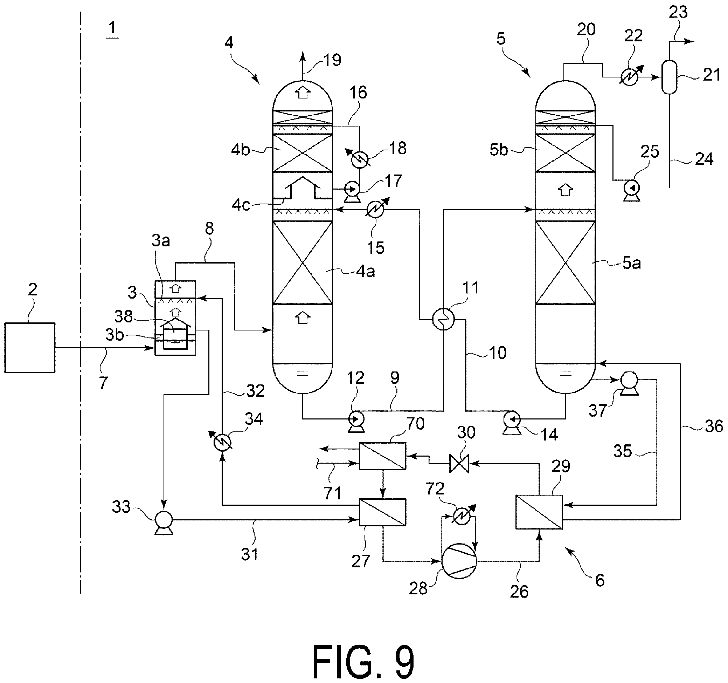

As illustrated in FIG. 9, the carbon dioxide recovery system 1 according to the fourth embodiment is provided, between the decompressor 30 and the evaporator 27 in the heat pump 6, with a heater 70 for heating a refrigerant by heat exchange between the refrigerant and a heating medium.

The heating medium is not particularly limited, and any heating medium can be used, but it is preferable to use a heating medium from which heat to be wasted without being reused in the carbon dioxide recovery system 1 has been recovered.

For example, any of the fluids heated by cooling a cooling target fluid in the coolers 15, 18, 22, and 34 or a mixed fluid in which two or more fluids are mixed can be supplied to the heater 70 as a heating medium.

If the compressor 28 of the heat pump 6 is provided with a cooler 72 for adjusting the temperature of an outlet gas of the compressor 28, the fluid heated by the heat exchange in the cooler 72 can be supplied to the heater 70 as a heating medium in place of or together with the fluid or the mixed fluid described above.

For this reason, a heating medium supply line 71 for supplying the heater 70 with a heating medium communicates with at least one of the coolers 15, 18, 22, 34, and 72.

Other configurations are the same as those of the first embodiment.

### Operation of Carbon Dioxide Recovery System According to Fourth Embodiment of Present Disclosure

In the fourth embodiment, the refrigerant decompressed by the decompressor 30 flows into the evaporator 27 after being heated by the heater 70.

Other operations are the same as those of the first embodiment.

In the fourth embodiment, since heat generated from at least one of the absorption tower 4, the regeneration tower 5, and the heat pump 6 is used in the heat pump 6, the thermal efficiency of the entire carbon dioxide recovery system 1 can be improved.

### Fifth Embodiment

Next, a carbon dioxide recovery system according to the fifth embodiment will be described.

The carbon dioxide recovery system according to the fifth embodiment is one according to any of the first to fourth embodiments in which the heat pump 6 is provided with a plurality of evaporators.

Hereinafter, the fifth embodiment will be described with a configuration in which the above-described change is made to the first embodiment, but the fifth embodiment may be configured by making the above-described change to any of the second to fourth embodiments.

Note that in the fifth embodiment, the same components as those of the first embodiment are denoted by the same reference signs, and detailed description thereof will be omitted.

### Configuration of Carbon Dioxide Recovery System According to Fifth Embodiment of Present Disclosure

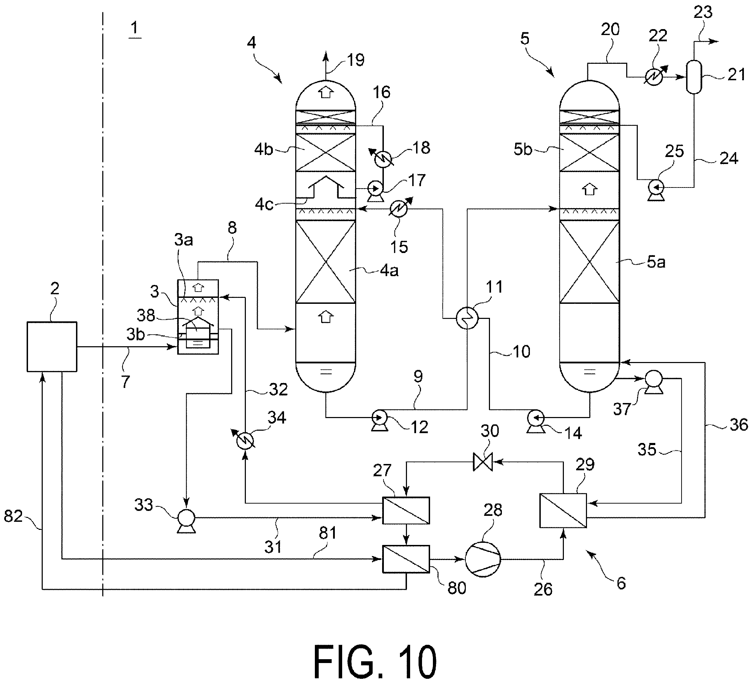

As illustrated in FIG. 10, the carbon dioxide recovery system 1 according to the fifth embodiment is provided with a second evaporator 80 between the evaporator 27 and the compressor 28 in the heat pump 6.

While the number of the second evaporators 80 is not limited to one and may be two or more, a configuration provided with one second evaporator 80 will be described below.

The second evaporator 80 is for heating a refrigerant by exchanging heat between the refrigerant flowing out of the evaporator 27 and a heating medium containing heat generated from a discharge source.

For example, if the discharge source 2 is a gas engine, there is a flow path (jacket or the like) through which cooling water flows in order to cool the gas engine, and therefore the cooling water heated by cooling the gas engine when flowing through the flow path can be used as a heating medium.

A heating medium supply line 81 for supplying such the heating medium to the second evaporator 80 and a heating medium return line 82 for returning the heating medium having exchanged heat with the refrigerant in the second evaporator 80 to the discharge source 2 are provided.

Other configurations are the same as those of the first embodiment.

### Operation of Carbon Dioxide Recovery System According to Fifth Embodiment of Present Disclosure

The fifth embodiment is different from the operation of the first embodiment only in that the refrigerant is heated and evaporated by the cooling water from the cooling tower 3 and the heating medium from the discharge source 2 in the heat pump 6, and the other operations are the same as those of the first embodiment.

In the fifth embodiment, since the heat generated from the discharge source 2 is used in the heat pump 6, the thermal efficiency of the entire carbon dioxide recovery system 1 can be improved.

The content described in each of the above embodiments is understood as follows, for example.

[1] A carbon dioxide recovery system according to one aspect includes:
   a cooling tower (3) configured to cool a gas containing carbon dioxide by bringing the gas into contact with cooling water;
   an absorption tower (4) configured to cause the carbon dioxide to be absorbed into an absorbing liquid by bringing the gas cooled in the cooling tower (3) into contact with the absorbing liquid;
   a regeneration tower (5) configured to release the carbon dioxide from the absorbing liquid by heating the absorbing liquid in which the carbon dioxide is absorbed in the absorption tower (4); and
   a heat pump (6) configured to directly or indirectly heat the absorbing liquid in the regeneration tower (5) with heat of the cooling water.
   According to the carbon dioxide recovery system of the present disclosure, even when the temperature of the gas containing carbon dioxide is high, the absorbing liquid in the regeneration tower is directly or indirectly heated by the heat pump using, as the heat source, the cooling water obtained by cooling the gas in the cooling tower. Therefore, even a discharge source at any location, that is, a point source allows the carbon dioxide to be efficiently recovered while discharge of the carbon dioxide generated for obtaining the heat source is suppressed.
[2] A carbon dioxide recovery system according to another aspect is the carbon dioxide recovery system of [1],
   wherein the cooling tower (3) includes a water quality improvement device (38) configured to adjust water quality of the cooling water in the cooling tower (3).

If the gas supplied to the cooling tower contains solids such as a sulfur oxide, a nitrogen oxide, or ash generated by combustion, these are contained in the cooling water by contact between the gas and the cooling water.

If the cooling water containing them is supplied to the heat pump, there is a risk of corroding the pipe and the evaporator of the heat pump.

On the other hand, according to the configuration of [2], since the cooling water whose water quality has been adjusted by the water quality improvement device is supplied to the heat pump, the risk of corrosion of the pipe and the evaporator of the heat pump can be reduced.

[3] A carbon dioxide recovery system according to still another aspect is the carbon dioxide recovery system of [1] or [2] including
a reboiler (50) configured to heat the absorbing liquid by exchanging heat between the absorbing liquid and steam in the regeneration tower (5),
wherein at least one of the heat pump (6) or the reboiler (50) heats the absorbing liquid in the regeneration tower (5).

When the carbon dioxide recovery system is started, the heat amount may be insufficient by heating with the heat pump, and when the electricity rate is high, the operation cost of the carbon dioxide recovery system may increase by heating with the heat pump.

On the other hand, according to the configuration of [3], the hybrid operation in which the loads of the heat pump and the reboiler are optimally controlled enables the operation of the carbon dioxide recovery system in consideration of the smooth start operation of the carbon dioxide recovery system and the low operation cost.

[4] A carbon dioxide recovery system according to still another aspect is the carbon dioxide recovery system of any one of [1] to [3] including
a heat exchanger (60) configured to exchange heat between the cooling water supplied from the cooling tower (3) to the heat pump (6) and the gas supplied to the cooling tower (3).

According to such a configuration, the temperature of the refrigerant flowing out of the evaporator rises as compared with the case not provided with such a heat exchanger, and thus the performance of the heat pump can be improved.

[5] A carbon dioxide recovery system according to still another aspect is the carbon dioxide recovery system of any one of [1] to [4],
wherein the heat pump (6) includes
a refrigerant circulation line (26) through which a refrigerant can circulate,
an evaporator (27) in which heat is exchanged between the cooling water supplied from the cooling tower (3) and the refrigerant,
a compressor (28) configured to compress the refrigerant flowing out of the evaporator (27),
a condenser (29) in which heat is exchanged between the refrigerant compressed by the compressor (28) and the absorbing liquid in the regeneration tower (5), and
a decompressor (30) that decompresses the refrigerant flowing out of the condenser (29),
the refrigerant decompressed by the decompressor (30) is supplied to the evaporator (27),
the heat pump (6) further includes a heater (70) configured to heat the refrigerant by exchanging heat between the refrigerant and a heating medium between the decompressor (30) and the evaporator (27), and
the heating medium contains heat generated from at least one of the absorption tower (4), the regeneration tower (5), or the heat pump (6).

According to such a configuration, the heat generated from at least one of the absorption tower, the regeneration tower, and the heat pump is used in the heat pump, and thus the thermal efficiency of the entire carbon dioxide recovery system can be improved.

[6] A carbon dioxide recovery system according to still another aspect is the carbon dioxide recovery system of any one of [1] to [5],
wherein the heat pump (6) includes
a refrigerant circulation line (26) through which a refrigerant can circulate,
an evaporator (27) in which heat is exchanged between the cooling water supplied from the cooling tower (3) and the refrigerant,
a compressor (28) configured to compress the refrigerant flowing out of the evaporator (27),
a condenser (29) in which heat is exchanged between the refrigerant compressed by the compressor (28) and the absorbing liquid in the regeneration tower (5), and
a decompressor (30) configured to decompress the refrigerant flowing out of the condenser (29),
the refrigerant decompressed by the decompressor (30) is supplied to the evaporator (27),
the heat pump (6) further includes a second evaporator (80) configured to heat the refrigerant by exchanging heat between the refrigerant and a heating medium between the evaporator (27) and the compressor (28), and
the heating medium contains heat generated from a discharge source (2) that has discharged the gas.

According to such a configuration, the heat generated from the discharge source that has discharged the gas containing carbon dioxide is used in the heat pump, and thus the thermal efficiency of the entire carbon dioxide recovery system can be improved.

[7] A carbon dioxide recovery system according to still another aspect is the carbon dioxide recovery system of any one of [1] to [6] including:
a reclaimer (41) configured to generate steam by heating the absorbing liquid in the regeneration tower (5); and
a steam supply line (48) through which the steam generated in the reclaimer (41) is supplied to the regeneration tower (5),
wherein the heat pump (6) includes
a refrigerant circulation line (26) through which a refrigerant can circulate,
an evaporator (27) in which heat is exchanged between the cooling water supplied from the cooling tower (3) and the refrigerant,
a compressor (28) configured to compress the refrigerant flowing out of the evaporator (27),
a condenser (29) in which heat is exchanged between the refrigerant compressed by the compressor (28) and the absorbing liquid in the regeneration tower (5), and
a decompressor (30) configured to decompress the refrigerant flowing out of the condenser (29), and
the absorbing liquid in the reclaimer (41) is directly or indirectly heated by heat of the refrigerant circulating through the refrigerant circulation line (26).

Such a configuration decreases the concentration of the nonvolatile accumulation in the absorbing liquid in the regeneration tower and can thus suppress a decrease in reactivity between the absorbing liquid and carbon dioxide in the absorption tower.

[8] A carbon dioxide recovery system according to still another aspect is the carbon dioxide recovery system of any one of [1] to [7],
wherein the heat pump (6) includes
a refrigerant circulation line (26) through which a refrigerant can circulate,
an evaporator (27) in which heat is exchanged between the cooling water supplied from the cooling tower (3) and the refrigerant,
a compressor (28) configured to compress the refrigerant flowing out of the evaporator (27),
a condenser (29) in which heat is exchanged between the refrigerant compressed by the compressor (28) and the absorbing liquid in the regeneration tower (5), and
a decompressor (30) configured to decompress the refrigerant flowing out of the condenser (29),
the carbon dioxide recovery system (1) includes
a sensor (42) configured to detect a flow rate of the gas supplied to the cooling tower (4) and the carbon dioxide in the gas, and
a control device (43) configured to detect a load of a discharge source (2) of the gas and receive a detection value from the sensor (42), and
the control device (43) controls an operation condition of the compressor (28) based on the load and the detection value from the sensor (42).

According to such a configuration, the operation conditions of the carbon dioxide recovery system can be appropriately controlled in accordance with the amount of carbon dioxide supplied to the carbon dioxide recovery system.

[9] A carbon dioxide recovery system according to still another aspect is the carbon dioxide recovery system of any one of [1] to [8],
wherein the heat pump (6) includes
a refrigerant circulation line (26) through which a refrigerant can circulate,
an evaporator (27) in which heat is exchanged between the cooling water supplied from the cooling tower (3) and the refrigerant,
two or more compressors (28a and 28b) configured to compress the refrigerant flowing out of the evaporator (27);
a condenser (29) in which heat is exchanged between the refrigerant compressed by the two or more compressors (28a and 28b) and the absorbing liquid in the regeneration tower (5), and
a decompressor (30) configured to decompress the refrigerant flowing out of the condenser (29).

According to such a configuration, the heat amount (enthalpy difference) that can be recovered by the evaporator can be increased.

[10] A carbon dioxide recovery system according to still another aspect is the carbon dioxide recovery system of [9] including:
a refrigerant recycle line (45) through which part of the refrigerant flowing out of the condenser (29) is returned to between two adjacent compressors (28a and 28b) of the two or more compressors (28a and 28b);
a decompressor (46) provided in the refrigerant recycle line (45); and
an economizer (44) configured to exchange heat between a refrigerant adiabatically expanded by the decompressor (46) and a remnant of the refrigerant flowing out of the condenser (29).

According to such a configuration, the refrigerant on the low-pressure side can be cooled, and the performance of the heat pump can be improved.

Since the outlet temperature of the compressor on an upstream side decreases, the maximum temperature of the refrigerant gas can be suppressed, and the reliability of the heat pump can be improved.

[11] A carbon dioxide recovery system according to still another aspect is the carbon dioxide recovery system of any one of [1] to [10],
wherein the heat pump (6) includes
a refrigerant circulation line (26) through which a refrigerant can circulate,
an evaporator (27) in which heat is exchanged between the cooling water supplied from the cooling tower (3) and the refrigerant,
a compressor (28) configured to compress the refrigerant flowing out of the evaporator (27),
a condenser (29) in which heat is exchanged between the refrigerant compressed by the compressor (28) and the absorbing liquid in the regeneration tower (5),
a decompressor (30) configured to decompress the refrigerant flowing out of the condenser (29), and
an internal heat exchanger (47) configured to exchange heat between the refrigerant flowing out of the evaporator (27) and the refrigerant flowing out of the condenser (29).

According to such a configuration, heat exchange in the internal heat exchanger allows the refrigerant gas flowing into the compressor to have a degree of superheat, help reduce the risk of mixing droplets into the refrigerant gas flowing into the compressor, and thus reduce the risk of damaging an impeller of the compressor.

### Reference Signs List

1 Carbon dioxide recovery system
2 Discharge source
3 Cooling tower
4 Absorption tower
5 Regeneration tower
6 Heat pump
26 Refrigerant circulation line
27 Evaporator
28 Compressor
28a Compressor
28b Compressor
29 Condenser
30 Decompressor
38 Water quality improvement device
41 Reclaimer
42 Sensor
43 Control device
44 Economizer
45 Refrigerant recycle line
46 Decompressor
47 Internal heat exchanger
48 Steam supply line
50 Reboiler
60 Heat exchanger
70 Heater
80 Second evaporator

## Claims

1. "A carbon dioxide recovery system, comprising:
a cooling tower configured to cool a gas containing carbon dioxide by bringing the gas into contact with cooling water;"
an absorption tower configured to cause the carbon dioxide to be absorbed into an absorbing liquid by bringing the gas cooled in the cooling tower into contact with the absorbing liquid;
a regeneration tower configured to release the carbon dioxide from the absorbing liquid by heating the absorbing liquid in which the carbon dioxide is absorbed in the absorption tower; and
a heat pump configured to directly or indirectly heat the absorbing liquid in the regeneration tower with heat of the cooling water.

2. The carbon dioxide recovery system according to claim 1, wherein the cooling tower includes a water quality improvement device configured to adjust water quality of the cooling water in the cooling tower.

3. "The carbon dioxide recovery system according to claim 1 or 2 comprising
a reboiler configured to heat the absorbing liquid by exchanging heat between the absorbing liquid and steam in the regeneration tower,"
wherein at least one of the heat pump or the reboiler heats the absorbing liquid in the regeneration tower.

4. The carbon dioxide recovery system according to claim 1 or 2 comprising a heat exchanger configured to exchange heat between the cooling water supplied from the cooling tower to the heat pump and the gas supplied to the cooling tower.

5. "The carbon dioxide recovery system according to claim 1 or 2,
wherein the heat pump includes"
a refrigerant circulation line through which a refrigerant can circulate, an evaporator in which heat is exchanged between the cooling water supplied from the cooling tower and the refrigerant,
a compressor configured to compress the refrigerant flowing out of the evaporator,
a condenser in which heat is exchanged between the refrigerant compressed by the compressor and the absorbing liquid in the regeneration tower, and
a decompressor configured to decompress the refrigerant flowing out of the condenser,
the refrigerant decompressed by the decompressor is supplied to the evaporator,
the heat pump further includes a heater configured to heat the refrigerant by exchanging heat between the refrigerant and a heating medium between the decompressor and the evaporator, and
the heating medium contains heat generated from at least one of the absorption tower, the regeneration tower, or the heat pump.

6. "The carbon dioxide recovery system according to claim 1 or 2,
wherein the heat pump includes"
a refrigerant circulation line through which a refrigerant can circulate,
an evaporator in which heat is exchanged between the cooling water supplied from the cooling tower and the refrigerant,
a compressor configured to compress the refrigerant flowing out of the evaporator,
a condenser in which heat is exchanged between the refrigerant compressed by the compressor and the absorbing liquid in the regeneration tower, and
a decompressor configured to decompress the refrigerant flowing out of the condenser,
the refrigerant decompressed by the decompressor is supplied to the evaporator,
the heat pump further includes a second evaporator configured to heat the refrigerant by exchanging heat between the refrigerant and a heating medium between the evaporator and the compressor, and
the heating medium contains heat generated from a discharge source that has discharged the gas.

7. "The carbon dioxide recovery system according to claim 1 or 2 comprising:
a reclaimer configured to generate steam by heating the absorbing liquid in the regeneration tower; and"
a steam supply line through which the steam generated in the reclaimer is supplied to the regeneration tower,
wherein the heat pump includes
a refrigerant circulation line through which a refrigerant can circulate,
an evaporator in which heat is exchanged between the cooling water supplied from the cooling tower and the refrigerant,
a compressor configured to compress the refrigerant flowing out of the evaporator,
a condenser in which heat is exchanged between the refrigerant compressed by the compressor and the absorbing liquid in the regeneration tower, and
a decompressor configured to decompress the refrigerant flowing out of the condenser, and
the absorbing liquid in the reclaimer is directly or indirectly heated by heat of the refrigerant circulating through the refrigerant circulation line.

8. "The carbon dioxide recovery system according to claim 1 or 2,
wherein the heat pump includes"
a refrigerant circulation line through which a refrigerant can circulate,
an evaporator in which heat is exchanged between the cooling water supplied from the cooling tower and the refrigerant,
a compressor configured to compress the refrigerant flowing out of the evaporator,
a condenser in which heat is exchanged between the refrigerant compressed by the compressor and the absorbing liquid in the regeneration tower, and
a decompressor configured to decompress the refrigerant flowing out of the condenser,
the carbon dioxide recovery system includes
a sensor configured to detect a flow rate of the gas supplied to the cooling tower and the carbon dioxide in the gas, and
a control device configured to detect a load of a discharge source of the gas and receive a detection value from the sensor, and
the control device controls an operation condition of the compressor based on the load and the detection value from the sensor.

9. "The carbon dioxide recovery system according to claim 1 or 2,
wherein the heat pump includes"
a refrigerant circulation line through which a refrigerant can circulate,
an evaporator in which heat is exchanged between the cooling water supplied from the cooling tower and the refrigerant,
two or more compressors configured to compress the refrigerant flowing out of the evaporator,
a condenser in which heat is exchanged between the refrigerant compressed by the two or more compressors and the absorbing liquid in the regeneration tower, and
a decompressor configured to decompress the refrigerant flowing out of the condenser.

10. "The carbon dioxide recovery system according to claim 9 comprising:
a refrigerant recycle line through which part of the refrigerant flowing out of the condenser is returned to between two adjacent compressors of the two or more compressors;"
a decompressor provided in the refrigerant recycle line; and
an economizer configured to exchange heat between a refrigerant adiabatically expanded by the decompressor and a remnant of the refrigerant flowing out of the condenser.

11. "The carbon dioxide recovery system according to claim 1 or 2,
wherein the heat pump includes"
a refrigerant circulation line through which a refrigerant can circulate,
an evaporator in which heat is exchanged between the cooling water supplied from the cooling tower and the refrigerant,
a compressor configured to compress the refrigerant flowing out of the evaporator,
a condenser in which heat is exchanged between the refrigerant compressed by the compressor and the absorbing liquid in the regeneration tower,
a decompressor configured to decompress the refrigerant flowing out of the condenser, and
an internal heat exchanger configured to exchange heat between the refrigerant flowing out of the evaporator and the refrigerant flowing out of the condenser.
